# EUROPEAN PATENT APPLICATION

(11) **EP 4 697 306 A1**
(43) Date of publication of application: **18.02.2026**
(21) Application number: 24864076.5
(22) Date of filing: 07.05.2024
(51) Int. Cl.: G09F 9/30

(54) **DISPLAY APPARATUS AND ELECTRONIC DEVICE**

(30) Priority: 14.09.2023 CN 202322513349 U
(71) Applicant: Huawei Technologies Co., Ltd., Shenzhen, Guangdong 518129 (CN)
(72) Inventor: WANG, Lei, Shenzhen, Guangdong 518129 (CN); MAO, Weihua, Shenzhen, Guangdong 518129 (CN); LV, Ren, Shenzhen, Guangdong 518129 (CN); WANG, Yanxin, Shenzhen, Guangdong 518129 (CN)
(74) Representative: Epping - Hermann - Fischer
(86) International application number: PCT/CN2024/091508
(87) International publication number: WO 2025/055351

(57) **Abstract**

Embodiments of this application provide a display apparatus and an electronic device, and relate to the field of display device technologies. The display apparatus includes a first constituent part, a second constituent part, a third constituent part, a first connection part, and a second connection part. The first constituent part and the second constituent part move toward each other via the first connection part, and the second constituent part and the third constituent part move away from each other via the second connection part, so that the display apparatus is in a folded state. In the folded state, an orthographic projection of a boundary that is of the first constituent part and that is away from the first connection part onto a reference plane is farther from an orthographic projection of the first connection part onto the reference plane than an orthographic projection of a boundary that is of the second connection part and that is away from the first connection part onto the reference plane. An orthographic projection of a boundary that is of the third constituent part and that is away from the second connection part onto the reference plane is closer to an orthographic projection of the second connection part onto the reference plane than an orthographic projection of a boundary that is of the first connection part and that is away from the second connection part onto the reference plane. The display apparatus provided in embodiments of this application has good drop-resistant and screen breakage-resistant performance in the folded state, thereby effectively improving reliability of the display apparatus and prolonging a service life of the display apparatus.

## Description

### TECHNICAL FIELD

This application relates to the field of display device technologies, and in particular, to a display apparatus and an electronic device.

### BACKGROUND

With development of display technologies, foldable display apparatuses (for example, mobile phones) that can meet a use requirement of users for a large display size and can implement portability or compactness for easy storage are increasingly favored by the users.

Currently, foldable dual-screen display apparatuses are common. To further leverage an advantageous feature of the foldable display apparatus, for example, to further enlarge a display size of the display apparatus, how to develop and design an excellent-performance foldable display apparatus with three or more screens that has becomes an urgent problem to be resolved currently.

### SUMMARY

Embodiments of this application provide a display apparatus and an electronic device, to optimize drop-resistant performance of the display apparatus and reduce a probability of damage to a screen, thereby improving reliability of a foldable display apparatus and prolonging a service life of the foldable display apparatus.

To achieve the foregoing objectives, the following technical solutions are used in embodiments of this application.

According to a first aspect, a display apparatus is provided. The display apparatus includes a first constituent part, a second constituent part, a third constituent part, a first connection part, and a second connection part.

The first constituent part and the second constituent part are rotatably connected via the first connection part, and the second constituent part and the third constituent part are rotatably connected via the second connection part. The first constituent part and the second constituent part move toward or away from each other via the first connection part, and the second constituent part and the third constituent part move toward or away from each other via the second connection part, so that the display apparatus switches between an unfolded state and a folded state.

In the folded state, the first constituent part, the second constituent part, and the third constituent part are stacked in a first direction, the first connection part is located on a same side of the first constituent part and the second constituent part, the second connection part is located on a same side of the second constituent part and the third constituent part, and the first connection part and the second connection part are respectively disposed on two sides of the second constituent part in a second direction. The second direction intersects the first direction.

In the folded state, an orthographic projection of a boundary that is of the first constituent part and that is away from the first connection part onto a reference plane is farther from an orthographic projection of the first connection part onto the reference plane than an orthographic projection of a boundary that is of the second connection part and that is away from the first connection part onto the reference plane. An orthographic projection of a boundary that is of the third constituent part and that is away from the second connection part onto the reference plane is closer to an orthographic projection of the second connection part onto the reference plane than an orthographic projection of a boundary that is of the first connection part and that is away from the second connection part onto the reference plane. The reference plane is perpendicular to the first direction.

In the display apparatus provided in this embodiment of this application, the orthographic projection of the boundary that is of the first constituent part and that is away from the first connection part onto the reference plane is set to be farther from the orthographic projection of the first connection part onto the reference plane than the orthographic projection of the boundary that is of the second connection part and that is away from the first connection part onto the reference plane, and the orthographic projection of the boundary that is of the third constituent part and that is away from the second connection part onto the reference plane is set to be closer to the orthographic projection of the second connection part onto the reference plane than the orthographic projection of the boundary that is of the first connection part and that is away from the second connection part onto the reference plane. In other words, when the first constituent part and the second constituent part are folded, a side edge that is of the first constituent part and that is away from the first connection part protrudes beyond the second connection part toward a direction away from the first connection part; and when the second constituent part and the third constituent part are folded, a side edge that is of the third constituent part and that is away from the second connection part is recessed toward the second connection part relative to a side edge that is of the first connection part and that is away from the second connection part.

Based on the foregoing arrangement, in an accident such as falling of the display apparatus in the folded state, a probability that a problem such as screen breakage or damage occurs on the display apparatus can be effectively reduced. For example, when the first constituent part, the second constituent part, and the third constituent part are folded, the second constituent part that is prone to screen breakage and damage is recessed relative to a boundary of the first constituent part with a stronger protection capability (for example, higher hardness), and the third constituent part that is prone to screen breakage and damage is recessed relative to a boundary of the first connection part with a stronger protection capability (for example, higher hardness). Therefore, in the accident such as falling of the display apparatus in the folded state, a falling force applying point of the display apparatus may be transferred to the first constituent part and the first connection part that have a stronger protection capability. This prevents structures such as the second constituent part and the third constituent part from being damaged, and effectively reduces a risk that a problem such as screen breakage or damage occurs on the display apparatus. In a possible implementation of the first aspect, the display apparatus includes a first middle frame, a second middle frame, a third middle frame, a first hinge, a second hinge, and a display.

The first middle frame and the second middle frame are rotatably connected via the first hinge, and the second middle frame and the third middle frame are rotatably connected via the second hinge. In the unfolded state, the display is disposed on a same side of the first middle frame, the second middle frame, the third middle frame, the first hinge, and the second hinge. The display includes a first subscreen, a fourth subscreen, a second subscreen, a fifth subscreen, and a third subscreen that are sequentially connected. The first constituent part includes a first middle frame and a first subscreen, and the first subscreen is disposed on one side of the first middle frame. The second constituent part includes a second middle frame and a second subscreen, and the second subscreen is disposed on one side of the second middle frame. The third constituent part includes a third middle frame and a third subscreen, and the third subscreen is disposed on one side of the third middle frame. The first connection part includes a first hinge and a fourth subscreen, and the fourth subscreen is disposed on one side of the first hinge. The second connection part includes a second hinge and a fifth subscreen, and the fifth subscreen is disposed on one side of the second hinge.

In the folded state, the first middle frame, the second middle frame, and the third middle frame are sequentially stacked in the first direction, a display surface of the first subscreen faces a display surface of the second subscreen, and the third subscreen is located on a side that is of the third middle frame and that is away from the second middle frame.

This ensures portability of the display apparatus while further ensuring display of a small-size screen of the display apparatus in the folded state.

In a possible implementation of the first aspect, an orthographic projection of a boundary that is of the first middle frame and that is away from the first hinge onto the reference plane is farther from an orthographic projection of the first hinge onto the reference plane than an orthographic projection of a boundary that is of the fifth subscreen and that is away from the first hinge onto the reference plane. An orthographic projection of a boundary that is of the third middle frame and that is away from the second hinge onto the reference plane is closer to an orthographic projection of the second hinge onto the reference plane than an orthographic projection of a boundary that is of the first hinge and that is away from the second hinge onto the reference plane.

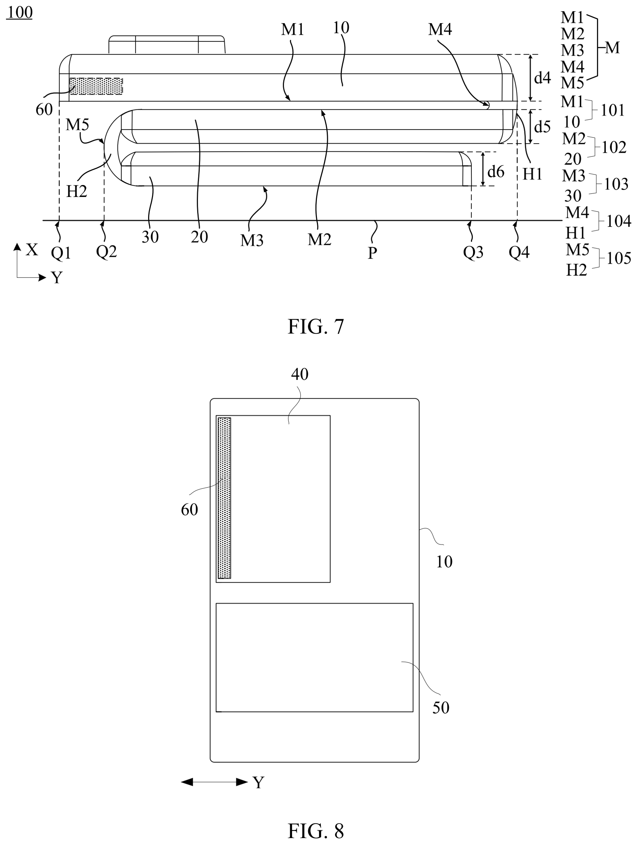

In other words, a left side edge (based on an orientation in FIG. 7) of the first middle frame is designed to protrude beyond a left side edge of the fifth subscreen, and a right side edge of the third middle frame is designed to be recessed relative to a right side edge of the first hinge.

Based on the foregoing arrangement, damage to the display can be effectively avoided in an accident such as falling of the display apparatus. For example, when the first constituent part, the second constituent part, and the third constituent part are folded, the fifth subscreen is located on a left side of the folded display apparatus. The left side edge of the first middle frame is designed to protrude beyond the left side edge of the fifth subscreen, so that a probability that the fifth subscreen is in contact with an external structure can be effectively reduced during falling of the display apparatus, thereby avoiding damage to the fifth subscreen. Similarly, the right side edge of the third middle frame is designed to be recessed relative to the right side edge of the first hinge. In this case, when a right side surface of the display apparatus in the folded state is subjected to force due to falling of the display apparatus, a probability that the right side edge of the third middle frame with lower stability and hardness is in contact with the external structure can be reduced. In this way, a force applying position is transferred to a connection position (that is, the first middle frame with higher hardness of the first connection part) between the first constituent part and the second constituent part, to prevent a display corresponding to the third constituent part from being damaged and cracked from the right side edge, thereby effectively improving reliability of the display apparatus and prolonging a service life of the display apparatus.

In a possible implementation of the first aspect, the display apparatus further includes a main board and a battery. The main board and the battery are disposed in the first constituent part. This can increase hardness and weight of the first constituent part, to improve falling reliability of the display apparatus in the folded state. For example, a probability that the first constituent part with higher hardness falls at a lower position is increased after falling, to protect the second constituent part and the third constituent part that are prone to screen breakage and damage, and optimize drop-resistant and screen breakage-resistant performance of the display apparatus.

In a possible implementation of the first aspect, a thickness of the first constituent part is greater than a thickness of the second constituent part and greater than a thickness of the third constituent part; and/or a weight of the first constituent part is greater than a weight of the second constituent part and greater than a weight of the third constituent part; and/or hardness of the first constituent part is greater than hardness of the second constituent part and greater than hardness of the third constituent part.

The thickness of the first constituent part is set to be greater than the thickness of the second constituent part and the thickness of the third constituent part, so that a protection capability for the first subscreen can be improved, and a risk of screen breakage of the first subscreen can be reduced. When the force applying position is transferred to the first constituent part, the thicker first constituent part has a higher drop-resistant and screen breakage-resistant capability.

The first constituent part is designed to have a relatively heavy weight. In this case, after the display apparatus in the folded state falls, a probability that the first constituent part falls at a lower position (for example, falls on the ground) is higher, and further the force applying position is transferred to the first constituent part. This improves a protection capability for the second constituent part and the third constituent part that are prone to screen breakage and damage, further improves reliability of the display apparatus, and prolongs a service life of the display apparatus.

In a possible implementation of the first aspect, the display apparatus further includes a communication component. The communication component is disposed in the first constituent part, and at least partially disposed at an end part that is of the first constituent part and that is away from the first connection part. In the folded state of the display apparatus, the part that is of the first constituent part and that is provided with the communication component protrudes beyond the second constituent part and the third constituent part. This can prevent the second constituent part and the third constituent part from blocking a signal transmission path of the communication component, thereby improving signal transmission effect of the communication component.

In a possible implementation of the first aspect, the communication component includes an antenna, and the antenna is disposed at the end part that is of the first constituent part and that is away from the first connection part.

In a possible implementation of the first aspect, the display apparatus further includes at least one third connection part. The display apparatus includes a plurality of second constituent parts, and a quantity of second constituent parts is an odd number. Two adjacent second constituent parts are rotatably connected via the third connection part.

In the folded state, an orthographic projection of a boundary that is of a third connection part located on a same side as the second connection part and that is away from the first connection part onto the reference plane is closer to the orthographic projection of the first connection part onto the reference plane than the orthographic projection of the boundary that is of the first constituent part and that is away from the first connection part on the reference plane. An orthographic projection of a boundary that is of a third connection part located on a same side as the first connection part and that is away from the second connection part onto the reference plane is closer to the orthographic projection of the second connection part onto the reference plane than the orthographic projection of the boundary that is of the first connection part and that is away from the second connection part onto the reference plane.

In this implementation, multi-screen folding of the display apparatus can be implemented, to further increase a display size of the display apparatus in full-screen display, or improve portability of the folded display apparatus. In addition, the third connection part can be recessed relative to the side edge that is of the first constituent part with a stronger protection capability and that is away from the first connection part, or a side edge that is of the second connection part with a stronger protection capability and that is away from the first connection part. In this way, the third connection part and the second constituent part that are prone to screen breakage and damage are protected from external damage.

In a possible implementation of the first aspect, when the display apparatus includes the display, in the folded state, for the plurality of second constituent parts, two second subscreens corresponding to two second constituent parts closest to the first constituent part are disposed away from each other, and two second subscreens corresponding to two second constituent parts closest to the third constituent part are disposed close to each other. Therefore, when the display apparatus is in the folded state, the third subscreen can be located on an outer surface of the display apparatus, to facilitate display of a small-size screen of the display apparatus in the folded state.

According to a second aspect, an electronic device is provided. The electronic device includes a processor and the display apparatus provided in any embodiment of the first aspect. The processor is electrically connected to the display apparatus.

For technical effects brought by the electronic device according to the second aspect, refer to the technical effects brought by the display apparatus according to the first aspect. Details are not described herein again.

### BRIEF DESCRIPTION OF DRAWINGS

FIG. 1 is a diagram of a structure of an electronic device according to an embodiment of this application;
FIG. 2 is a three-dimensional diagram of a display apparatus in a folded state according to an embodiment of this application;
FIG. 3 is a three-dimensional diagram of a display apparatus in an unfolded state according to an embodiment of this application;
FIG. 4 is a main view of a display apparatus in an unfolded state according to an embodiment of this application;
FIG. 5 is a rear view of a display apparatus in an unfolded state according to an embodiment of this application;
FIG. 6 is a side view of a display apparatus in an unfolded state according to an embodiment of this application;
FIG. 7 is a side view of a display apparatus in a folded state according to an embodiment of this application;
FIG. 8 is a diagram of a structure of a first constituent part according to an embodiment of this application; and
FIG. 9 is another side view of a display apparatus in a folded state according to an embodiment of this application.

### DESCRIPTION OF EMBODIMENTS

The following clearly and completely describes technical solutions in some embodiments of this application with reference to the accompanying drawings. It is clear that the described embodiments are merely some rather than all embodiments of this application. All other embodiments obtained by a person of ordinary skill in the art based on embodiments of this application shall fall within the protection scope of this application.

In the descriptions of this application, it should be understood that directions or position relationships indicated by terms such as "center", "up", "down", "front", "rear", "left", "right", "vertical", "horizontal", "top", "bottom", "inside", and "outside" are based on the directions or the position relationships shown in the accompanying drawings, and are merely intended to describe this application and simplify the descriptions, but not intended to indicate or imply that an indicated apparatus or element shall have a specific direction or be constructed and operated in a specific direction, and therefore cannot be understood as a limitation on this application.

Unless otherwise required by the context, throughout the specification and claims, the term "include" is interpreted as "open and inclusive", that is, "include but not limited to". In the description of the specification, terms such as "an embodiment", "some embodiments", "example embodiments", "examples", or "some examples" are intended to indicate that specific features, structures, materials, or features related to embodiments or examples are included in at least one embodiment or example of this application. The schematic representations of the foregoing terms do not necessarily refer to a same embodiment or example. In addition, the specific feature, structure, material, or characteristic may be included in any one or more embodiments or examples in any appropriate manner.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more.

In the descriptions of some embodiments, expressions of "connection" and extensions thereof may be used. The term "connection" should be understood in a broad sense. For example, the "connection" may be a fixed connection, a detachable connection, or an integral connection, or may be a direct connection, or an indirect connection implemented through an intermediate medium. Embodiments disclosed herein are not necessarily limited to content of this specification.

"A and/or B" includes the following three combinations: only A, only B, and a combination of A and B.

As used herein, "parallel", "perpendicular to", and "equal to" include described cases and similar cases. A range of a similar case is in an acceptable deviation range. The acceptable deviation range is determined by a person of ordinary skill in the art by considering an error (namely, a limitation of a measurement system) related to measurement being discussed and measurement of a specific quantity. For example, "parallel" includes "absolutely parallel" and "approximately parallel", and an acceptable deviation range of "approximately parallel" may be, for example, a deviation within 5°. "Perpendicular to" includes "absolutely perpendicular to" and "approximately perpendicular to", and an acceptable deviation range of "approximately perpendicular to" may also be, for example, a deviation within 5°. "Equal to" includes "absolutely equal to" and "approximately equal to". An acceptable deviation range of "approximately equal to" may be that, for example, a difference between two equal objects is less than or equal to 5% of either of the two objects.

Example implementations are described herein with reference to a sectional view and/or a plane view that are/is used as idealized example accompanying drawings. In the accompanying drawings, for clarity, thicknesses of layers and regions are increased. Therefore, a change in a shape in the accompanying drawings due to, for example, a manufacturing technique and/or tolerance may be envisaged. Therefore, example implementations should not be construed as being limited to a shape of a region shown herein, but rather include shape deviations due to, for example, manufacturing. Therefore, the regions shown in the accompanying drawings are essentially examples, and their shapes are not intended to show actual shapes of regions of a device, and are not intended to limit a scope of the example implementations.

In addition, a scenario described in embodiments of this application is intended to describe the technical solutions in embodiments of this application more clearly, but does not constitute a limitation on the technical solutions provided in embodiments of this application. A person of ordinary skill in the art may learn that as a new scenario emerges, the technical solutions provided in embodiments of this application are also applicable to a similar technical problem.

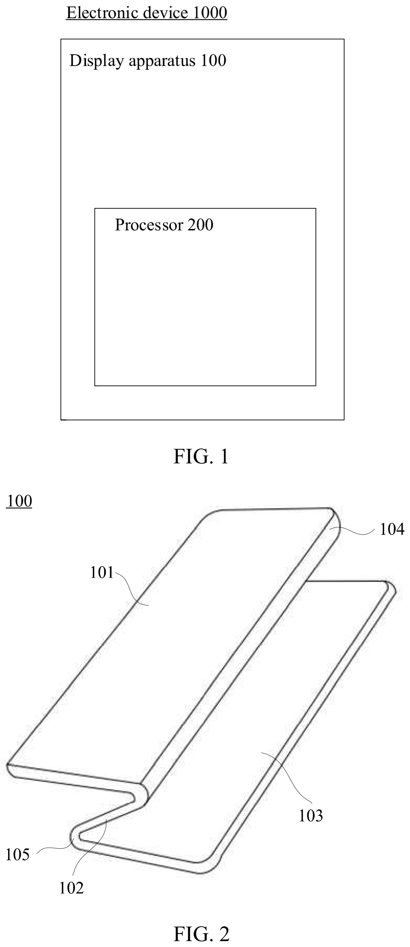

An embodiment of this application provides an electronic device (as shown in an electronic device 1000 in FIG. 1). The electronic device may be different types of user equipment or terminal devices such as a mobile phone (Mobile Phone), a tablet computer (Pad), a computer, a personal digital assistant (Personal Digital Assistant, PDA), a television, an intelligent wearable product (for example, a smartwatch or a smart band), a virtual reality (Virtual Reality, VR) terminal device, an augmented reality (Augmented Reality, AR) terminal device, a small-sized charging household appliance (for example, a soybean milk machine, a robot vacuum cleaner), an uncrewed aerial vehicle, a radar, an aerospace device, a vehicle-mounted device, and a vehicle. The electronic device may alternatively be a network device like a base station. A specific form of the electronic device is not specifically limited in this embodiment of this application.

FIG. 1 is a diagram of a structure of an electronic device 1000 according to an embodiment of this application.

As shown in FIG. 1, the electronic device 1000 includes a display apparatus 100. The display apparatus 100 may be any apparatus that displays both moving (for example, a video) and static (for example, a still image) content, and both text and an image.

Refer to FIG. 1. The electronic device 1000 further includes a processor 200. The processor 200 is electrically connected to the display apparatus 100, to control the display apparatus 100 to display an image.

For example, the processor 200 may be a central processing unit (Central Processing Unit, CPU for short), or may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor or the like.

For example, the processor 200 may be encapsulated in the display apparatus 100. For example, when the electronic device 1000 is a mobile phone, the processor 200 may be integrated into a main board of the display apparatus 100, or may be assembled in a rear housing of the display apparatus 100.

Alternatively, for example, the processor 200 may be independent of the display apparatus 100. For example, when the electronic device 1000 is a computer, the display apparatus 100 is used as a display of the computer, and the processor 200 may be disposed in a main unit of the computer and is electrically connected to the display.

It may be understood that the structure of the electronic device 1000 described in this embodiment of this application does not constitute a limitation on a specific structure of the electronic device 1000. The electronic device 1000 may include more or fewer components shown in FIG. 1, or may have a different component combination manner or arrangement manner shown in FIG. 1.

An embodiment of this application further provides a display apparatus 100. The display apparatus 100 may be used independently in the electronic device 1000, or may be used in combination with another structure (for example, a processor 200 or another electronic component) in the foregoing electronic device 1000.

In some embodiments below, a structure of the display apparatus 100 is described by using a foldable three-screen display apparatus as an example.

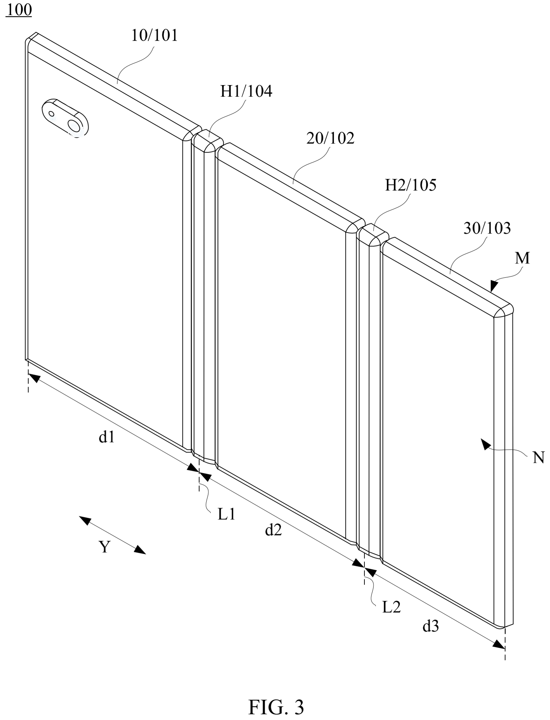

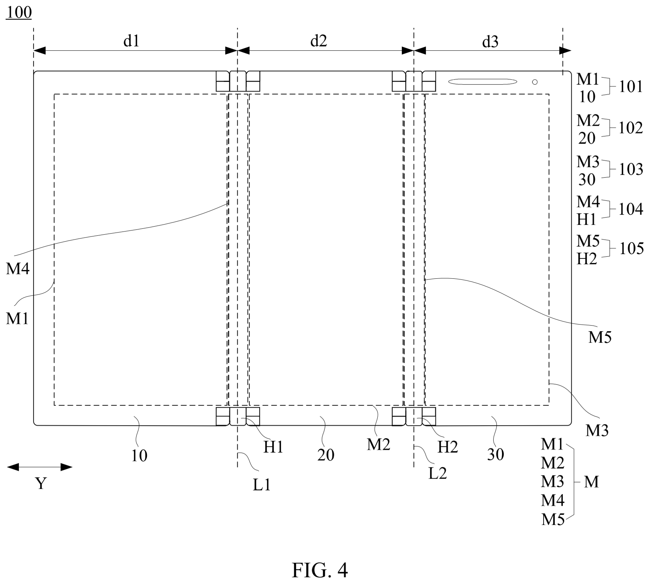

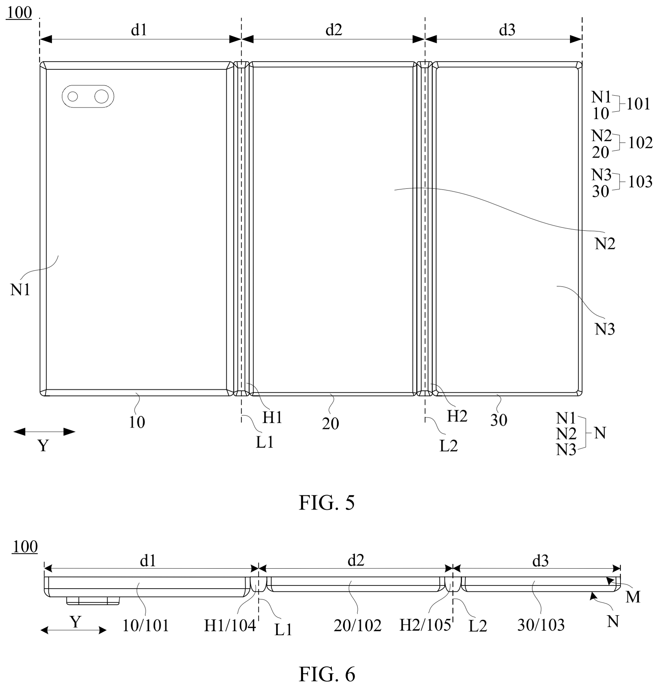

FIG. 2 and FIG. 7 are three-dimensional diagrams of a display apparatus 100 in a folded state according to an embodiment of this application. FIG. 3 is a three-dimensional diagram of a display apparatus 100 in an unfolded state according to an embodiment of this application. FIG. 4 and FIG. 5 are views of a display apparatus 100 in an unfolded state from different directions according to an embodiment of this application.

In some embodiments, as shown in FIG. 2, the display apparatus 100 includes a first constituent part 101, a second constituent part 102, a third constituent part 103, a first connection part 104, and a second connection part 105.

Refer to FIG. 2. The first constituent part 101 and the second constituent part 102 are rotatably connected via the first connection part 104, and the second constituent part 102 and the third constituent part 103 are rotatably connected via the second connection part 105.

The first constituent part 101 and the second constituent part 102 move toward or away from each other via the first connection part 104, and the second constituent part 102 and the third constituent part 103 move toward or away from each other via the second connection part 105, so that the display apparatus 100 switches between an unfolded state and a folded state.

Refer to FIG. 2. In the folded state, the first constituent part 101, the second constituent part 102, and the third constituent part 103 are stacked in a first direction X.

The first direction X is a thickness direction of the first constituent part 101, the second constituent part 102, and the third constituent part 103.

For example, refer to FIG. 2. In the folded state, the first constituent part 101, the second constituent part 102, and the third constituent part 103 are sequentially disposed in the first direction X.

Alternatively, in another embodiment, the display apparatus 100 may further present another folding manner. For example, in the folded state, the first constituent part 101, the second constituent part 102, and the third constituent part 103 are stacked in the first direction X, and the third constituent part 103 is folded between the first constituent part 101 and the second constituent part 102.

Refer to FIG. 2. In the folded state, the first connection part 104 is located on a same side of the first constituent part 101 and the second constituent part 102, the second connection part 105 is located on a same side of the second constituent part 102 and the third constituent part 103, and the first connection part 104 and the second connection part 105 are respectively located on two sides of the second constituent part 102 in a second direction Y.

Refer to FIG. 3. In the unfolded state, the first constituent part 101, the second constituent part 102, the third constituent part 103, the first connection part 104, and the second connection part 105 are sequentially arranged in the second direction Y.

The second direction Y intersects the first direction X. For example, the second direction Y may be perpendicular to the first direction X. The second direction Y is an arrangement direction of the first constituent part 101, the second constituent part 102, and the third constituent part 103 in the unfolded state of the display apparatus 100.

As shown in FIG. 7, in the folded state, an orthographic projection Q1 of a boundary that is of the first constituent part 101 and that is away from the first connection part 104 onto a reference plane P is farther from an orthographic projection of the first connection part 104 onto the reference plane P than an orthographic projection Q2 of a boundary that is of the second connection part 105 and that is away from the first connection part 104 onto the reference plane P. An orthographic projection of a boundary Q3 that is of the third constituent part 103 and that is away from the second connection part 105 onto the reference plane P is closer to an orthographic projection of the second connection part 105 onto the reference plane P than an orthographic projection of a boundary Q4 that is of the first connection part 104 and that is away from the second connection part 105 onto the reference plane P. The reference plane N is perpendicular to the first direction X.

That is, when the display apparatus 100 is in the folded state, the boundary that is of the first constituent part 101 and that is away from the first connection part 104 protrudes, toward a direction away from the first connection part 104, beyond the boundary that is of the second connection part 105 and that is away from the first connection part 104, and the boundary that is of third constituent part 103 and that is away from the second connection part 105 is recessed in a direction toward the second connection part 105 relative to the boundary that is of the first connection part 104 and that is away from the second connection part 105.

In the display apparatus 100 provided in this embodiment of this application, based on the foregoing arrangement, a probability that a problem such as screen breakage or damage occurs on the display apparatus 100 can be effectively reduced in an accident such as falling of the display apparatus 100 in the folded state. For example, when the first constituent part 101, the second constituent part 102, and the third constituent part 103 are folded, the second constituent part 102 that is prone to screen breakage and damage is recessed relative to a boundary of the first constituent part 101 with a stronger protection capability (for example, higher hardness or thickness), and the third constituent part 103 that is prone to screen breakage and damage is recessed relative to a boundary of the first connection part 104 with a stronger protection capability. Therefore, in the accident such as falling of the display apparatus 100 in the folded state, a falling force applying point of the display apparatus 100 may be transferred to the first constituent part 101 and the first connection part 104 that have a stronger protection capability. For example, in the folded state, when a left side surface (based on an orientation in FIG. 7) of the display apparatus 100 lands on the ground, a force applying point is located on a side edge of the protruding first constituent part 101, and when a right side surface (orientation shown in FIG. 7) of the display apparatus 100 lands on the ground, a force applying point is located on an outer surface of the protruding first connection part 104. This prevents structures such as the second constituent part 102 and the third constituent part 103 that are recessed from being damaged, and effectively reduces a risk that a problem such as screen breakage and damage occurs on the display apparatus 100.

In some embodiments, as shown in FIG. 3, the display apparatus 100 includes a first middle frame 10, a second middle frame 20, a third middle frame 30, a first hinge H1, a second hinge H2, and a display M.

For example, refer to FIG. 3. The first middle frame 10, the second middle frame 20, and the third middle frame 30 are sequentially connected via the first hinge H1 and the second hinge H2.

For example, refer to FIG. 3. Side edges that are of the first middle frame 10, the second middle frame 20, and the third middle frame 30 and that are connected to each other may be longer side edges or shorter side edges. In the accompanying drawings, an example in which the longer side edges are connected is merely used to describe the structure of the display apparatus 100, and this is not limited.

For example, refer to FIG. 3. The display apparatus 100 may further include a rear housing N. The first middle frame 10, the second middle frame 20, and the third middle frame 30 may be structures configured to connect the display M of the display apparatus 100 and the rear housing.

For example, refer to FIG. 3. The rear housing N is disposed on a non-display side (a side on which light emitting is not performed) of the display M. Refer to FIG. 3. The rear housing N and the display M are respectively disposed on two sides of a middle frame structure formed by the first middle frame 10, the second middle frame 20, and the third middle frame 30, and are connected via the middle frame structure, to implement assembly of the display apparatus 100.

For example, the first middle frame 10, the second middle frame 20, and the third middle frame 30 may be used as a side housing of the display apparatus 100, and enclose with the rear housing N to form a groove. Some components of the display apparatus 100, such as a battery, may be disposed in the groove. For example, the first middle frame 10, the second middle frame 20, and the third middle frame 30 may further include a middle frame body located in the groove, and some components of the display apparatus 100, such as a sensor and a chip may be fastened in the groove via the middle frame body.

For example, refer to FIG. 5. The rear housing N may include a first sub-housing N1, a second sub-housing N2, and a third sub-housing N3. The first sub-housing N1, the second sub-housing N2, and the third sub-housing N3 respectively correspond to the first middle frame 10, the second middle frame 20, and the third middle frame 30. The first sub-housing N1, the second sub-housing N2, and the third sub-housing N3 are separated from each other, to facilitate unfolding or folding of the display apparatus 100.

Refer to FIG. 3. The display M of the display apparatus 100 is used as a side surface of the display apparatus 100, and is configured to display an image.

For example, refer to FIG. 3. In the unfolded state, the display M is disposed on a same side of the first middle frame 10, the second middle frame 20, the third middle frame 30, the first hinge H1, and the second hinge H2, to facilitate image display on a side that is of the display apparatus 100 and on which the display M is disposed.

For example, the display M may be a liquid crystal display (Liquid Crystal Display, LCD for short), or the display M may be an electroluminescent display or a photoluminescent display. When the display M is an electroluminescent display, the electroluminescent display may be an organic electroluminescent (Organic Light-Emitting Diode, OLED for short) display or a quantum dot electroluminescent (Quantum Dot Light Emitting Diode, QLED for short) display. When the display M is a photoluminescent display, a photoluminescent display apparatus may be a quantum dot photoluminescent display.

It may be understood that a side that is of the display M and that is away from the first middle frame 10, the second middle frame 20, the third middle frame 30, the first hinge H1, and the second hinge H2 is a display side (that is, a side used for light-emitting display).

FIG. 4 is a main view of a display apparatus 100 according to an embodiment of this application. FIG. 5 is a rear view of a display apparatus 100 according to an embodiment of this application. FIG. 6 is a side view of a display apparatus 100 in an unfolded state according to an embodiment of this application.

For example, refer to FIG. 4. The display M includes a first subscreen M1, a fourth subscreen M4, a second subscreen M2, a fifth subscreen M5, and a third subscreen M3 that are sequentially connected.

Refer to FIG. 4. It may be understood that the first constituent part 101 may include the first middle frame 10 and the first subscreen M1, and the first subscreen M1 is disposed on one side of the first middle frame 10. Similarly, the second constituent part 102 may include the second middle frame 20 and the second subscreen M2, and the second subscreen M2 is disposed on one side of the second middle frame 20. The third constituent part 103 may include the third middle frame 30 and the third subscreen M3, and the third subscreen M3 is disposed on one side of the third middle frame 30. The first connection part 104 includes the first hinge H1 and the fourth subscreen M4, and the fourth subscreen M4 is disposed on one side of the first hinge H1. The second connection part 105 includes the second hinge H2 and the fifth subscreen M5, and the fifth subscreen M5 is disposed on one side of the second hinge H2.

For example, refer to FIG. 5. When the display apparatus includes the housing N, the first constituent part 101 may further include the first sub-housing N1, the second constituent part 102 may further include the second sub-housing N2, and the third constituent part 103 may further include the third sub-housing N3.

For example, refer to FIG. 4. The display M is designed as an entire screen, to be specific, the first subscreen M1, the second subscreen M2, the third subscreen M3, the fourth subscreen M4, and the fifth subscreen M5 are integrally disposed, so that the display apparatus 100 can maintain good display effect in the unfolded state.

For example, refer to FIG. 3, FIG. 4, and FIG. 6. When the first middle frame 10, the second middle frame 20, and the third middle frame 30 are unfolded (that is, the entire display M is unfolded), the first subscreen M1, the second subscreen M2, the third subscreen M3, the fourth subscreen M4, and the fifth subscreen M5 are located on a same plane, to implement a large display size of the display apparatus 100.

Refer to FIG. 7. When the first middle frame 10 and the second middle frame 20 are folded, a display surface of the first subscreen M1 faces a display surface of the second subscreen M2. When the second middle frame 20 and the third middle frame 30 are folded, the third subscreen M3 is located on a side that is of the third middle frame 30 and that is away from the second middle frame 20.

That is, when the first middle frame 10, the second middle frame 20, and the third middle frame 30 are folded, the first subscreen M1 and the second subscreen M2 are folded on an inner side (that is, not exposed), and the third subscreen M3 is located on an outer surface. This reduces a size of the display apparatus 100, improves portability, and implements display of a small-size screen via the third subscreen M3.

It may be understood that, in this case, with reference to FIG. 7, the fourth subscreen M4 is located on a side that is of the first hinge H1 and that is close to the second hinge H2, and the fifth subscreen M5 is located on a side that is of the second hinge H2 and that is away from the first hinge H1. That is, when the display apparatus 100 is folded, the fourth subscreen M4 is folded on the inner side (that is, not exposed), and the fifth subscreen M5 is located on a right side surface.

Refer to FIG. 3 and FIG. 7. The first middle frame 10 and the second middle frame 20 are rotatably connected via the first hinge H1, and the second middle frame 20 and the third middle frame 30 are rotatably connected via the second hinge H2.

The first middle frame 10 and the second middle frame 20 may move toward or away from each other via the first hinge H1, and the second middle frame 20 and the third middle frame 30 may move toward or away from each other via the second hinge H2, so that the display M switches between the unfolded state (as shown in FIG. 3) and the folded state (as shown in FIG. 7).

For example, in a process in which the display M is switched from the unfolded state to the folded state, the first middle frame 10 and the second middle frame 20 move toward each other via the first hinge H1, toward the side on which the display M is disposed, and the second middle frame 20 and the third middle frame 30 move away from each other toward a side away from the display M, so that the display M is in the folded state (as shown in FIG. 7). In this way, the first subscreen M1 and the second subscreen M2 are folded on the inner side, and the third subscreen M3 is located on the outer surface.

It may be understood that the foregoing "rotatable connection" refers to a connection manner that can implement switching between the unfolded state and the folded state, for example, may be a hinged connection (that is, the first hinge H1 and the second hinge H2 are hinged structures), or may be another connection manner that can implement switching between the unfolded state and the folded state.

For example, "the first middle frame 10 and the second middle frame 20 are rotatably connected via the first hinge H1" means that the first hinge H1 may allow the first middle frame 10 and the second middle frame 20 to be folded or unfolded with each other. The second middle frame 20 and the third middle frame 30 are connected in the same manner.

Refer to FIG. 3. The first middle frame 10 and the second middle frame 20 are configured to be rotatably connected, and the second middle frame 20 and the third middle frame 30 are configured to be rotatably connected, so that the display apparatus 100 provided in this embodiment of this application may include the unfolded state and the folded state. Refer to FIG. 3. The unfolded state of the display apparatus 100 may be a state in which the first middle frame 10, the second middle frame 20, and the third middle frame 30 are approximately in a same plane. In this state, the display M of the display apparatus 100 lies flat, providing a maximized display size. Refer to FIG. 7. The folded state of the display apparatus 100 may be a state in which the first middle frame 10, the second middle frame 20, and the third middle frame 30 are sequentially stacked. In this state, the display apparatus 100 is stacked in a three-dimensional direction, so that a size of the display apparatus 100 in a two-dimensional plane (for example, a plane parallel to the first subscreen M1) is reduced, thereby facilitating carrying.

It may be understood that the display apparatus 100 may further include another state. For example, the first subscreen M1 and the second subscreen M2 are approximately at an obtuse angle, or only the second middle frame 20 and the third middle frame 30 are folded. The foregoing unfolded state and the folded state in this application do not limit an applying status of the display apparatus 100.

FIG. 7 is a side view of a display apparatus 100 in a folded state according to an embodiment of this application.

Refer to FIG. 7. When the display apparatus 100 is in the folded state, the first middle frame 10, the second middle frame 20, and the third middle frame 30 are sequentially stacked in the first direction X.

The first direction X is a thickness direction of the first middle frame 10, the second middle frame 20, and the third middle frame 30.

Refer to FIG. 7. When the display apparatus 100 is in the folded state, an orthographic projection Q1 of a boundary that is of the first middle frame 10 and that is away from the first hinge H1 onto the reference plane P is farther from an orthographic projection of the first hinge H1 onto the reference plane N than an orthographic projection Q2 of a boundary that is of the fifth subscreen M5 and that is away from the first hinge H1 onto the reference plane P. An orthographic projection Q3 of a boundary that is of the third middle frame 30 and that is away from the second hinge H2 onto the reference plane P is closer to an orthographic projection of the second hinge H2 onto the reference plane P than an orthographic projection Q4 of a boundary that is of the first hinge H1 and that is away from the second hinge H2 onto the reference plane P.

That is, when the display apparatus 100 is in the folded state, the boundary that is of the first middle frame 10 and that is away from the first hinge H1 protrudes, toward a direction away from the first hinge H1, beyond the boundary that is of the fifth subscreen M5 and that is away from the first hinge H1, and the boundary that is of the third middle frame 30 and that is away from the second hinge H2 is recessed in a direction toward the second hinge H2 relative to the boundary that is of the first hinge H1 and that is away from the second hinge H2.

For example, with reference to FIG. 3 to FIG. 6, when the display apparatus 100 is in the unfolded state, or with reference to FIG. 7, when the display apparatus 100 is in the folded state, a distance d1 between a side edge that is of the first middle frame 10 and that is away from the first hinge H1 and a center line L1 of the first hinge H1 is set to be greater than a distance d2 between the center line L1 of the first hinge H1 and a center line L2 of the second hinge H2, and a distance d3 between a side edge that is of the third middle frame 30 and that is away from the second hinge H2 and the center line L2 of the second hinge H2 is set to be less than the distance d2 between the center line L1 of the first hinge H1 and the center line L2 of the second hinge H2. That is, with reference to FIG. 3, d1>d2>d3. In this way, the boundary that is of the first middle frame 10 and that is away from the first hinge H1 protrudes, toward the direction away from the first hinge H1, beyond the boundary that is of the fifth subscreen M5 and that is away from the first hinge H1, and the boundary that is of the third middle frame 30 and that is away from the second hinge H2 is recessed in the direction toward the second hinge H2 relative to the boundary that is of the first hinge H1 and that is away from the second hinge H2.

It should be noted that the foregoing "center line L1 of the first hinge H1" indicates a midline between the first middle frame 10 and the second middle frame 20. For example, the center line L1 of the first hinge H1 may be a center line of two side edges that are close to each other and that are of the first middle frame 10 and the second middle frame 20. Alternatively, for example, when the first hinge H1 is approximately a cuboid, the center line L1 of the first hinge H1 may be a midline of side edges of the cuboid, and an extension direction of the midline is the same as an extension direction of two side edges that are close to each other and that are of the first middle frame 10 and the second middle frame 20. Alternatively, for example, when the first hinge H1 is approximately a cylinder, the center line L1 of the first hinge H1 may be an axis of the cylinder. Similarly, the foregoing "center line L2 of the second hinge H2" indicates a midline between the third middle frame 30 and the second middle frame 20.

For example, when sizes of the first hinge H1 and the second hinge H2 are approximately the same, with reference to FIG. 4 and FIG. 7, d1>d2>d3 is set, so that in the second direction Y, a size of the first middle frame 10 is greater than a size of the second middle frame 20, and a size of the third middle frame 30 is less than the size of the second middle frame 20.

The second direction Y is parallel to a surface of the display M, and is perpendicular to the first hinge H1 and the second hinge H2. In other words, when the display apparatus 100 is in the unfolded state, the second direction Y is a direction in which the first middle frame 10 points to the second middle frame 20. For example, refer to FIG. 3 to FIG. 5. The second direction Y is a width direction of the first middle frame 10, the second middle frame 20, and the third middle frame 30. In other words, in this embodiment, a width of the first middle frame 10 is greater than a width of the second middle frame 20, and a width of the third middle frame 30 is less than the width of the second middle frame 20.

In the display apparatus 100 provided in this embodiment of this application, when the first middle frame 10 and the second middle frame 20 are folded (as shown in FIG. 7, the display surface of the first subscreen M1 faces the display surface of the second subscreen M2), in a direction (that is, the second direction Y) that is perpendicular to the first hinge H1 and parallel to the surface of the display M, the side edge that is of the first middle frame 10 and that is away from the first hinge H1 protrudes, toward the direction away from the first hinge H1, beyond a side edge that is of the fifth subscreen M5 and that is away from the first hinge H1. When the second middle frame 20 and the third middle frame 30 are folded (as shown in FIG. 7, the third subscreen M3 is located on the side that is of the third middle frame 30 and that is away from the second middle frame 20), the side edge that is of the third middle frame 30 and that is away from the second hinge H2 is recessed toward the second hinge H2 relative to the first hinge H1.

That is, refer to FIG. 7. When the first middle frame 10, the second middle frame 20, and the third middle frame 30 are folded (that is, the display apparatus 100 is in the folded state, the first subscreen M1 and the second subscreen M2 are folded on the inner side, and the third subscreen M3 is located on the outer side), a left side boundary (orientation shown in FIG. 7) of the first middle frame 10 protrudes beyond a left side boundary of the fifth subscreen M5 (a left side in the folded state shown in FIG. 7), and a right side boundary (orientation shown in FIG. 7) of the third middle frame 30 is recessed relative to a right side boundary (a right side in the folded state shown in FIG. 7) of the first hinge H1.

Based on the foregoing arrangement, damage to the display M can be effectively avoided in an accident such as falling of the display apparatus 100. For example, refer to FIG. 7. When the first middle frame 10, the second middle frame 20, and the third middle frame 30 are folded (that is, when the display M is folded), the fifth subscreen M5 is exposed on a left side orientation shown in FIG. 7) of the display apparatus 100. A left side edge of the first middle frame 10 is designed to protrude beyond a left side edge of the fifth subscreen M5, so that when a left side surface of the display apparatus 100 in the folded state is subjected to force due to falling of the display apparatus 100, a probability that the exposed fifth subscreen M5 is in contact with an external structure (for example, the ground) can be effectively reduced, thereby avoiding damage to the fifth subscreen M5. Similarly, refer to FIG. 7. A right side edge of the third middle frame 30 is designed to be recessed relative to a right side edge of the first hinge H1. In this case, when a right side surface of the display apparatus 100 in the folded state is subjected to force due to falling of the display apparatus 100, a probability that the right side edge of the third middle frame 30 with lower stability and hardness is in contact with the external structure can be reduced. In this way, a force applying position is transferred to a connection position (that is, the first hinge H1 with high hardness) between the first middle frame 10 and the second middle frame 20, to prevent the display M (that is, the third subscreen M3) corresponding to the third middle frame 30 from being damaged and cracked from the right side edge, thereby effectively improving reliability of the display apparatus 100, and prolonging a service life of the display apparatus 100.

It may be understood that, as in the foregoing embodiment, a purpose that in the folded state both a left side edge and a right side edge of the first constituent part 101 protrude beyond the second constituent part 102 and the third constituent part 103 may be achieved by setting widths of the first middle frame 10, the second middle frame 20, and the third middle frame 30, which may alternatively be achieved in another manner, for example, by setting widths of the first sub-housing N1, the second sub-housing N2, and the third sub-housing N3. It may be understood that any other implementation in which the boundary that is of the first constituent part 101 and that is away from the first connection part 104 protrudes, toward the direction away from the first connection part 104, beyond the boundary that is of the second connection part 105 and that is away from the first connection part 104, and the boundary that is of the third constituent part 103 and that is away from the second connection part 105 is recessed in the direction toward the second connection part 105 relative to the boundary that is of the first connection part 104 and that is away from the second connection part 105 falls within the protection scope of this application. This is not limited in this application.

FIG. 8 is a diagram of a structure of a first constituent part 101 according to an embodiment of this application.

In some embodiments, as shown in FIG. 8, the display apparatus 100 may further include a main board 40 and a battery 50. Refer to FIG. 8. The main board 40 and the battery 50 are disposed in the first constituent part 101.

For example, the main board 40 and the battery 50 may be disposed in an accommodation cavity enclosed by the first sub-housing N1, the first middle frame 10, and the first subscreen M1.

It may be understood that in this embodiment of this application and the structure shown in FIG. 8, a structure of the first constituent part 101 is described merely as an example. The first constituent part 101 may include more or fewer structures than those shown in FIG. 8, or a layout of a structure inside the first constituent part 101 may be different from that shown in FIG. 8. This is not limited in this embodiment of this application.

The main board 40 and the battery 50 are disposed in the first constituent part 101, to improve hardness and weight of a position at which the first constituent part 101 is located, thereby improving falling reliability of the display apparatus 100 in the folded state. For example, a probability that the first constituent part 101 with higher hardness falls at a lower position (for example, the ground) is improved after falling, to protect the second constituent part 102 and the third constituent part 103 that are prone to screen breakage and damage, and optimize drop-resistant and screen breakage-resistant performance of the display apparatus 100.

In some embodiments, as shown in FIG. 7, a thickness d4 of the first constituent part 101 is greater than a thickness d5 of the second constituent part 102, and is greater than a thickness d6 of the third constituent part 103.

For example, the thickness d5 of the second constituent part 102 may be approximately the same as the thickness d6 of the third constituent part 103.

The thickness d4 of the first constituent part 101 is set to be greater than the thickness d5 of the second constituent part 102 and the thickness d6 of the third constituent part 103. In this case, when the first constituent part 101 is subjected to a force during falling (for example, the first constituent part 101 falls on the ground), a path for transmitting external force from the first sub-housing N1 to the first subscreen M1 may be increased. In this way, a risk of screen breakage of the first subscreen M1 due to transmission of the external force from the first sub-housing N1 to the first subscreen M1 can be reduced, and a protection capability for the first subscreen M1 is improved. That is, when a force applying position is transferred to the first constituent part 101 (that is, when both the left side boundary and the right side boundary of the first constituent part 101 are protruding), the thicker first constituent part 101 has a higher drop-resistant and screen breakage-resistant capability.

In some embodiments, a weight of the first constituent part 101 is greater than a weight of the second constituent part 102 and greater than a weight of the third constituent part 103.

The first constituent part 101 is designed to have a relatively heavy weight. In this case, after the display apparatus 100 in the folded state falls, a probability that the first constituent part 101 falls at a lower position (for example, falls on the ground) is higher, and further the force applying position is transferred to the first constituent part 101. This improves a protection capability for the second constituent part 102 and the third constituent part 103 that are prone to screen breakage and damage, further improves reliability of the display apparatus 100, and prolongs a service life of the display apparatus 100.

In some embodiments, hardness of the first constituent part 101 is greater than hardness of the second constituent part 102 and greater than hardness of the third constituent part 103.

The first constituent part 101 is designed to have relatively high hardness, to improve a protection capability of the first constituent part 101. In this case, after the display apparatus 100 in the folded state falls, damage to the first constituent part 101 with a protruding side edge that has a higher probability of contacting the ground is avoided. This further improves a protection capability for the second constituent part 102 and the third constituent part 103 that are prone to screen breakage and damage, improves reliability of the display apparatus 100, and prolongs a service life of the display apparatus 100.

In some embodiments, as shown in FIG. 8, the display apparatus 100 further includes a communication component 60. Refer to FIG. 8. The communication component 60 is disposed in the first constituent part 101, and is disposed at an end part that is of the first constituent part 101 and that is away from the first connection part 104.

For example, the communication component 60 may be disposed in the accommodation cavity enclosed by the first sub-housing N1, the first middle frame 10, and the first subscreen M1.

For example, the communication component 60 may include an antenna, or may include a structure that needs to communicate with the outside, such as a radio frequency component.

It may be understood that the foregoing "end part that is of the first constituent part 101 and that is away from the first connection part 104" is a part at a position at which a side edge that is of the first constituent part 101 and that is away from the first connection part 104 is located.

For example, refer to FIG. 7. The communication component 60 may be disposed in a part that is of the first constituent part 101 and that protrudes beyond the second connection part 105 (in the folded state of the display apparatus 100).

The communication component 60 is disposed in the first constituent part 101, and is disposed at the end part that is of the first constituent part 101 and that is away from the first connection part 104. In this case, in the folded state of the display apparatus 100, the part that is of the first constituent part 101 and that is provided with the communication component 60 protrudes beyond the second constituent part 102 and the third constituent part 103. This can prevent the second constituent part 102 and the third constituent part 103 from blocking a signal transmission path of the communication component 60, and also prevent the second subscreen M2 and the third subscreen M3 that correspond to the second constituent part 102 and the third constituent part 103 from blocking the signal transmission path of the communication component 60, thereby effectively improving signal transmission effect of the communication component 60.

For example, refer to FIG. 7. When the display apparatus 100 is in the folded state, and the first constituent part 101 and the second constituent part 102 are folded inward (that is, the first subscreen M1 and the second subscreen M2 are disposed in contact with each other), the fifth subscreen M5 is disposed away from the communication component 60. In other words, the part that is of the first constituent part 101 and that is provided with the communication component 60 protrudes, toward the direction away from the first connection part 104, beyond a side edge that is of the fifth subscreen M5 and that is away from the first connection part 104, to prevent the fifth subscreen M5 from blocking the signal transmission path of the communication component 60.

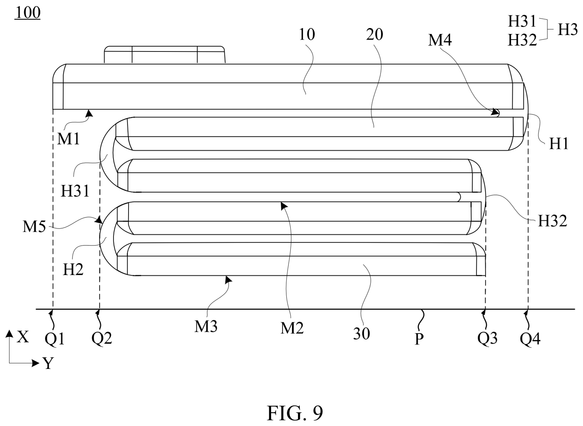

FIG. 9 is another side view of a display apparatus 100 in a folded state according to an embodiment of this application.

In some embodiments, as shown in FIG. 9, the display apparatus 100 provided in this embodiment of this application may further include at least one third connection part H3. In the figure, two third connection parts H3 (including H31 and H32) are used as an example.

Refer to FIG. 9. The display apparatus 100 may include a plurality of second constituent parts 102. In addition, a display M includes a plurality of second subscreens M2, and one second subscreen M2 is correspondingly disposed on one side of each second constituent part 102.

For example, refer to FIG. 9. Side edges of the plurality of second constituent parts 102 are sequentially connected in a second direction Y.

Refer to FIG. 9. Two adjacent second constituent parts 102 are rotatably connected via the third connection part H3. To be specific, the two adjacent second constituent parts 102 may move toward or away from each other via the third connection part H3, so that two second subscreens M2 corresponding to the two second constituent parts 102 may be unfolded or folded.

It may be understood that, with reference to FIG. 9, a first constituent part 101 is connected to a second constituent part 102 closest to the first constituent part 101 via a first connection part 104, and a third constituent part 103 is connected to a second constituent part 102 closest to the third constituent part 103 via a second connection part 105.

The plurality of second constituent parts 102 are disposed, to implement multi-screen folding of the display apparatus 100 (a foldable five-screen in FIG. 9 is merely used as an example), so that a display size of the display apparatus 100 in full-screen display can be further increased, or a size of the folded display apparatus 100 can be further reduced, thereby improving portability.

For example, refer to FIG. 9. A quantity of the plurality of second constituent parts 102 is an odd number.

In this embodiment, for example, refer to FIG. 9. When the display M is folded, for the plurality of second constituent parts 102, two second subscreens M2 corresponding to two second constituent parts 102 closest to the first constituent part 101 are disposed away from each other, and two second subscreens M2 corresponding to two second constituent parts 102 closest to the third constituent part 103 are disposed close to each other. In other words, when the display apparatus 100 is in the folded state, the odd quantity of second constituent parts 102 may enable the third subscreen M1 to be located on an outer surface of the display apparatus 100, to facilitate display of a small-size screen of the display apparatus 100 in the folded state.

For example, the quantity of the plurality of second constituent parts 102 may be an even number (not shown in the figure). In this case, after the display apparatus 100 is folded, the third subscreen M3 may also be folded on an inner side (that is, not located on the outer surface), and the third constituent part 103 is unfolded only when display is required to expose the third subscreen M3, thereby further improving a drop-resistant and screen breakage-resistant capability of the display apparatus 100 in the folded state.

For example, in another embodiment, refer to FIG. 9. When the display apparatus 100 is in the folded state, an orthographic projection Q2 (as shown in FIG. 9, which is located at a same position as Q2 in the foregoing embodiment) of a boundary that is of a third connection part H3 located on a same side as the second connection part 102 and that is away from the first connection part 104 onto a reference plane P is closer to an orthographic projection of the first connection part 104 onto the reference plane P than an orthographic projection Q1 (as shown in FIG. 9, which is located at a same position as Q1 in the foregoing embodiment) of a boundary that is of the first constituent part 101 and that is away from the first connection part 104 on the reference plane P, an orthographic projection Q3 (as shown in FIG. 9, which is located at a same position as Q3 in the foregoing embodiment) of a boundary that is of a third connection part H3 located on a same side as the first connection part 104 and that is away from the second connection part 105 onto the reference plane P is closer to an orthographic projection of the second connection part 105 onto the reference plane P than an orthographic projection Q4 (as shown in FIG. 9, which is located at a same position as Q4 in the foregoing embodiment) of a boundary that is of the first connection part 104 and that is away from the second connection part 105 onto the reference plane P.

That is, a connection position (that is, the third connection part H3) of the two adjacent second constituent parts 102 are also recessed relative to a side edge of the first constituent part 101, to protect the thinner second constituent part 102, and prevent the second constituent part 102 from being damaged or a part (that is, the second subscreen M2) of the display M corresponding to the second constituent part 102 and a part of the display M corresponding to the third connection part H3 from being broken.

It may be understood that, when the display apparatus 100 includes the plurality of second constituent parts 102, similar to the foregoing embodiment, both a left side edge and a right side edge of the first constituent part 101 protrude beyond the second constituent part 102 and the third constituent part 103 by setting relative sizes of a first middle frame 10, a second middle frame 20, and a third middle frame 30. For details, refer to the foregoing implementation. Details are not described herein again.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A display apparatus, comprising:
a first constituent part, a second constituent part, and a third constituent part; and
a first connection part and a second connection part, wherein the first constituent part and the second constituent part are rotatably connected via the first connection part, the second constituent part and the third constituent part are rotatably connected via the second connection part, the first constituent part and the second constituent part move toward or away from each other via the first connection part, and the second constituent part and the third constituent part move toward or away from each other via the second connection part, so that the display apparatus switches between an unfolded state and a folded state;
in the folded state, the first constituent part, the second constituent part, and the third constituent part are stacked in a first direction, the first connection part is located on a same side of the first constituent part and the second constituent part, the second connection part is located on a same side of the second constituent part and the third constituent part, the first connection part and the second connection part are respectively disposed on two sides of the second constituent part in a second direction, and the second direction intersects the first direction; and
in the folded state, an orthographic projection of a boundary that is of the first constituent part and that is away from the first connection part onto a reference plane is farther from an orthographic projection of the first connection part onto the reference plane than an orthographic projection of a boundary that is of the second connection part and that is away from the first connection part onto the reference plane, and an orthographic projection of a boundary that is of the third constituent part and that is away from the second connection part onto the reference plane is closer to an orthographic projection of the second connection part onto the reference plane than an orthographic projection of a boundary that is of the first connection part and that is away from the second connection part onto the reference plane, wherein the reference plane is perpendicular to the first direction.

2. The display apparatus according to claim 1, comprising:
a first middle frame, a second middle frame, a third middle frame, a first hinge, and a second hinge, wherein the first middle frame and the second middle frame are rotatably connected via the first hinge, and the second middle frame and the third middle frame are rotatably connected via the second hinge; and
a display, wherein in the unfolded state, the display is disposed on a same side of the first middle frame, the second middle frame, the third middle frame, the first hinge, and the second hinge, and the display comprises a first subscreen, a fourth subscreen, a second subscreen, a fifth subscreen, and a third subscreen that are sequentially connected, wherein
the first constituent part comprises the first middle frame and the first subscreen, the first subscreen is disposed on one side of the first middle frame, the second constituent part comprises the second middle frame and the second subscreen, the second subscreen is disposed on one side of the second middle frame, the third constituent part comprises the third middle frame and the third subscreen, the third subscreen is disposed on one side of the third middle frame, the first connection part comprises the first hinge and the fourth subscreen, the fourth subscreen is disposed on one side of the first hinge, the second connection part comprises the second hinge and the fifth subscreen, and the fifth subscreen is disposed on one side of the second hinge; and
in the folded state, the first middle frame, the second middle frame, and the third middle frame are sequentially stacked in the first direction, a display surface of the first subscreen faces a display surface of the second subscreen, and the third subscreen is located on a side that is of the third middle frame and that is away from the second middle frame.

3. The display apparatus according to claim 2, wherein in the folded state, an orthographic projection of a boundary that is of the first middle frame and that is away from the first hinge onto the reference plane is farther from an orthographic projection of the first hinge onto the reference plane than an orthographic projection of a boundary that is of the fifth subscreen and that is away from the first hinge onto the reference plane, and an orthographic projection of a boundary that is of the third middle frame and that is away from the second hinge onto the reference plane is closer to an orthographic projection of the second hinge onto the reference plane than an orthographic projection of a boundary that is of the first hinge and that is away from the second hinge onto the reference plane.

4. The display apparatus according to any one of claims 1 to 3, further comprising a main board and a battery, wherein the main board and the battery are disposed in the first constituent part.

5. The display apparatus according to any one of claims 1 to 3, wherein at least one of the following is met:
a thickness of the first constituent part is greater than a thickness of the second constituent part and greater than a thickness of the third constituent part;
a weight of the first constituent part is greater than a weight of the second constituent part and greater than a weight of the third constituent part; or
hardness of the first constituent part is greater than hardness of the second constituent part and greater than hardness of the third constituent part.

6. The display apparatus according to any one of claims 1 to 3, further comprising a communication component, wherein the communication component is disposed in the first constituent part, and at least partially disposed at an end part that is of the first constituent part and that is away from the first connection part.

7. The display apparatus according to claim 6, wherein the communication component comprises an antenna, and the antenna is disposed at the end part that is of the first constituent part and that is away from the first connection part.

8. The display apparatus according to any one of claims 1 to 3, further comprising:
at least one third connection part, wherein
the display apparatus comprises a plurality of second constituent parts, a quantity of the second constituent parts is an odd number, and two adjacent second constituent parts are rotatably connected via the third connection part; and in the folded state, an orthographic projection of a boundary that is of a third connection part located on a same side as the second connection part and that is away from the first connection part onto the reference plane is closer to the orthographic projection of the first connection part onto the reference plane than the orthographic projection of the boundary that is of the first constituent part and that is away from the first connection part on the reference plane, and an orthographic projection of a boundary that is of a third connection part located on a same side as the first connection part and that is away from the second connection part onto the reference plane is closer to the orthographic projection of the second connection part onto the reference plane than the orthographic projection of the boundary that is of the first connection part and that is away from the second connection part onto the reference plane.

9. The display apparatus according to claim 8, wherein when the display apparatus comprises the display,
in the folded state, for the plurality of second constituent parts, two second subscreens corresponding to two second constituent parts closest to the first constituent part are disposed away from each other, and two second subscreens corresponding to two second constituent parts closest to the third constituent part are disposed close to each other.

10. An electronic device, comprising:
the display apparatus according to any one of claims 1 to 9; and
a processor, electrically connected to the display apparatus.
